# EUROPÄISCHE PATENTSCHRIFT

(11) **EP 1 190 794 B1**
(45) Veröffentlichungstag und Bekanntmachung des Hinweises auf die Patenterteilung: **02.02.2005**
(21) Anmeldenummer: 00120616.8
(22) Anmeldetag: 21.09.2000
(51) Int. Cl.: B23B 23/00, B23B 33/00

(54) **Verfahren zur Bearbeitung eines Werkstückes und Futter mit Zentrierdorn zu seiner Durchführung**
Method for machining a workpiece and chuck with live center for carrying out this process
Méthode pour usiner une pièce et mandrin avec pointe à centrer la mise en oeuvre de ce procédé

(43) Veröffentlichungstag der Anmeldung: 27.03.2002
(73) Patentinhaber: Illinois Tool Works, Inc., Glenview, Cook County, Illinois 60025 (US)
(72) Erfinder: Bohler, Erwin, 9553 Bettwiesen (CH)
(74) Vertreter: Blum, Rudolf Emil Ernst

(56) Entgegenhaltungen:
- EP-A- 0 523 573
- CH-A- 662 964

## Beschreibung

Bei der hochpräzisen Bearbeitung gewisser Werkstücke, wie z.B. Kurbelwellen, ist es manchmal wünschenswert, diese Bearbeitung (Drehen, Schleifen, etc.) teilweise zwischen Spitzen und teilweise mit einem in der Futter-Zange einer Werkzeugmaschine eingespannten Werkstück durchzuführen. Denn für die Bearbeitung von Stellen des Werkstückes, die von seinen Enden weit entfernt und fallweise ausserdem exzentrisch sind, muss das Werkstück an mindestens einem Ende durch eine Futterzange gehalten werden, d.h. diese Bearbeitung kann nicht zwischen Spitzen durchgeführt werden. Dabei muss, um eine präzise Zentrierung durch den Griff der Zange zu erhalten, diese auf eine vorher exakt zentrisch bearbeitete Fläche greifen können. Es ist aber oft schwierig oder unmöglich, das Werkstück für die vorangehende Bearbeitung dieser Fläche selbst (die z.B. ein Endlager einer Kurbelwelle sein kann) in einer Futterzange zu halten, sei es weil die zu bearbeitende Fläche dabei zu nahe an die Zange käme um für Werkzeuge zugänglich zu sein, sei es weil bei hinreichend frei zugänglicher Fläche überhaupt kein Platz am betreffenden Ende des Werkstückes existiert, an dem die Zange greifen könnte. Deshalb wird die betreffende Fläche oft in einem ersten, getrennten Arbeitsgang zwischen rotierenden Spitzen bearbeitet, was eine grosse Genauigkeit ermöglicht, die ihrerseits eine präzise Zentrierung des Werkstückes garantiert, wenn dieses in einem nachfolgenden Arbeitsgang durch eine auf die bearbeitete Fläche greifende Zange gehalten wird, beispielsweise um exzentrisch geschliffen zu werden.

Die Notwendigkeit, teilweise zwischen Spitzen und teilweise mit in der Zange des Futters einer Werkzeugmaschine eingespanntem Werkstück zu arbeiten hat bisher oft entweder ein Umrüsten der Maschine oder den Transfer des Werkstückes von einer Maschine zur anderen verlangt. Beides ist unökonomisch, zeitraubend und der Präzision des Endergebnisses abträglich. Es besteht daher der Wunsch nach einem Verfahren, welches es gestattet, auf ein und derselben Werkzeugmaschine von einer Arbeitsweise zur anderen überzugehen. Zu diesem Zweck offenbart das Dokument EP-A-0523 573 A1 ein Futter das sowohl radial zentrierende wie auch radial ausgleichende Spannbakken, sowie einen längs der Rotationsachse des Futters verschiebbaren Zentrierdorn besitzt, der einen Übergang zwischen beiden Arbeitsweisen ermöglicht. Es bleibt jedoch der Wunsch bestehen, dies bei kleinstmöglichem konstruktiven Aufwand mittels eines einfachen Verfahrens zu realisieren das eine grosse Steifigkeit und eine entsprechend hohe Genauigkeit der Werkstückeinspannung sichert. Zu diesem Zweck ist das erfindungsgemässe Verfahren wie in den Ansprüchen beschrieben definiert.

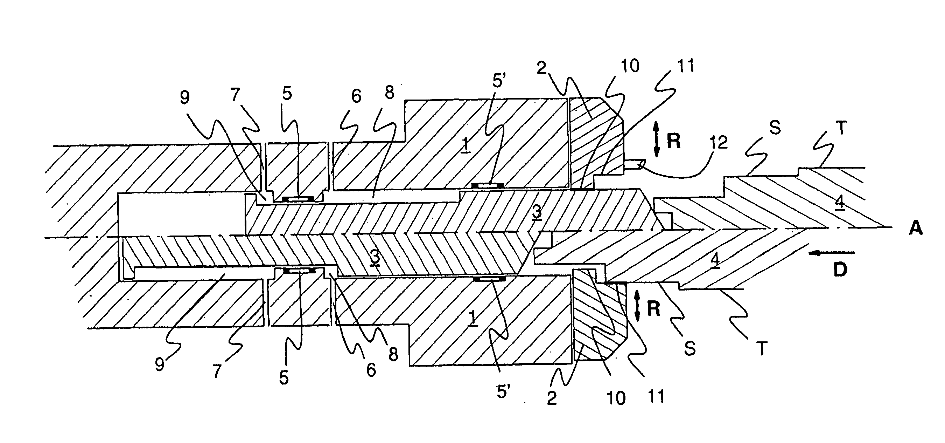

Im folgenden soll die Erfindung anhand der Beschreibung von Ausführungsbeispielen und der Zeichnung näher erläutert werden. Als anschauliche Hilfe zeigt die einzige Figur eine stark schematisierte Ausführungsform einer Vorrichtung zur Ausführung des erfindungsgemässen Verfahrens.

Es zeigt die Figur einen schematischen Schnitt durch zwei statische Zustände eines zur Ausführung des erfindungsgemässen Verfahrens geeigneten Futters für eine Werkzeugmaschine. Die Referenzziffer 1 bezeichnet den Körper des Futters, A seine Rotationsachse und 2 eine Backe der zum Futter gehörigen Zange. Im Futter 1 ist ein Zentrierdorn 3 so gelagert, dass er sich parallel zur Achse A verschieben kann. Dieser Dorn ist im oberen Schnitt der Figur in vorgeschobener Stellung und im unteren Schnitt in zurückgezogener Stellung gezeigt. Dementsprechend wird ein in der Figur rechts befindliches Werkstück 4 im oberen Schnitt an seinen dem Futter zugekehrten Ende durch den Dorn 3 gehalten und zentriert während es im unteren Schnitt in der Zange 2 eingespannt ist, und nicht mehr durch den Dorn getragen wird, obwohl es diesen fallweise noch berühren kann.

Der obere Schnitt zeigt den in der Regel als erster durchgeführten Arbeitsgang, bei dem eine am Ende des Werkstückes 4 befindliche Fläche S bearbeitet (beispielsweise geschliffen) wird. Für diesen Arbeitsgang ist der Dorn 3 ausgefahren, etwa durch den Druck einer über eine Leitung 6 im Körper des Futters in eine Kammer 8 gepressten hydraulischen Flüssigkeit. Nach seinem Ausfahren wird der Dorn an der durch einen verdickten Strich hervorgehobenen Stelle 10 durch die in üblicher (hier nicht gezeigten) Weise radial, in Richtung des Doppelpfeiles R beweglichen Backen der Zange des Futters gefasst.

Dadurch wird der Dorn 3 mit einer Präzision zentriert, die praktisch gleich der von der Zange 2 des Futters erreichten, und unabhängig vom Spiel des Dornes in seiner längsverschieblichen Lagerung im Futterkörper 1 ist. Bei extrem hohen Ansprüchen an die Präzision und/oder die Standzeit des Futters kann der Zentrierdorn 3 wie in der Zeichnung angedeutet in zwei sogenannten Dehnspannhülsen 5 und 5' gelagert sein, die gespannt werden können, um dem Dorn einen zusätzlichen Halt zu geben. Diese Hülsen weisen in bekannter Weise eine ringförmige, abgedichtete Kammer mit einer dünnen zylindrischen Innenwandung auf, deren Aussenfläche ein Gleitlager für den Zentrierdorn bildet. Wenn die Kammer (über eine nicht gezeigte Leitung) mit einer unter Druck stehenden Flüssigkeit gefüllt wird, wölbt sich ihre dünne Wandung radial etwas einwärts und fasst den Dorn indem sie das für seine achsiale Bewegung vorgesehene Spiel aufhebt. In dieser Weise kann der Dorn 3 in exakt zentrischer Weise arretiert und mit einem Minimum an Spiel wieder freigegeben werden.

In der ausgefahrenen Lage hält der Dorn das Werkstück so, dass die mit S bezeichnete Fläche nahe bei seinem linken Ende (beispielsweise das Endlager einer Welle) weit genug von Futter und Zange entfernt ist, um für Bearbeitungswerkzeuge leicht zugänglich zu sein. Daher kann in dieser Stellung die Fläche S mit der hohen Genauigkeit bearbeitet werden, die eine Arbeit zwischen Spitzen gewährleistet.

Der notwendige Rotationsantrieb des Werkstükkes kann beispielsweise realisiert werden, indem ein im oberen Schnitt der Zeichnung als abgebrochener Bolzen angedeuteter Mitnehmer-Bolzen 12 die Rotationsbewegung des Futters (in nicht gezeigter Weise) von einer Zangenbacke auf das Werkstück überträgt. Es kann aber auch zwischen festen Spitzen gearbeitet werden, indem das Futter mitsamt dem Dorn unbeweglich bleibt, und die Rotation des Werkstückes in bekannter (nicht gezeigter) Weise durch eine Riemenübertragung oder auf andere Art erzeugt wird.

Nach dieser Bearbeitung wird die Zange 2 gelöst und der Dorn eingezogen, was auf verschiedene Arten geschehen kann, beispielsweise durch den Druck einer über einen Kanal 7 in eine Kammer 9 gepressten hydraulischen Flüssigkeit, oder auch durch einen in der Figur durch den Pfeil D angedeuteten, gegen den Druck dieser Flüssigkeit wirkenden, nach links gerichteten, achsialen Druck des Werkstückes 4. Es ist dann möglich den Sitz des Werkstükkes 4 auf dem Dorn 3 während der Bewegung zu sichern, indem die den Dorn während des vorangehenden Arbeitsganges nach rechts drängende Kraft (hier der hydraulische Druck in der Kammer 8) nicht aufgehoben, sondern nur in einer Weise reduziert wird, die ein jedem Augenblick ein zuverlässiges Halten des Werkstückes 4 durch den Dorn sicherstellt. Dann wird keine zusätzliche Vorrichtung zum Stützen des Werkstückes beim Übergang von einer Verarbeitungsweise zur anderen benötigt. Bei einer Bearbeitung auf einer Zwillingsmaschine, bei welcher das andere (hier das rechte, nicht gezeigte) Ende des Werkstückes in einer im wesentlichen spiegelgleichen Weise von einem zweiten Kopf der Maschine gehalten wird, ist es beispielsweise möglich, die Bewegungen beider Futter und Dorne so zu synchronisieren, dass das eingespannte Werkstück, insbesondere beim Übergang zwischen aufeinanderfolgenden Bearbeitungsschritten, allein durch den Druck der Dorne und/oder die Zangen beider Maschinenköpfe zuverlässig gehalten wird.

Wie aus dem unteren Schnitt der Figur ersichtlich, kann nach dem Rückzug des Dornes 3 in das Innere des Futters 1 das Werkstück 4 so weit nach links verschoben werden, dass seine vorgängig zwischen Spitzen bearbeitete Fläche S zwischen die Backen 2 der Zange zu liegen kommt. Die Zange wird dann in üblicher Weise gespannt, um die Fläche S an der durch einen verdickten Strich hervorgehobenen Stelle 11 zu greifen und so das Werkstück 4 für die Bearbeitung entweder einer weiter entfernten Fläche T oder einer (nicht gezeigten) exzentrisch gelegenen Stelle zu halten. Im Gegensatz zu einem Einspannen zwischen Spitzen kann diese Halterung durch eine Zange robust und winkeltreu genug realisiert werden, um eine exakte Bearbeitung auch von exzentrischen Teilen des Werkstückes, wie z.B. Pleuellager, zu ermöglichen.

In der im unteren Schnitt der Figur gezeigten Stellung ist der in der Figur nach rechts gerichtete Druck des Dornes 3 auf das Werkstück 4 ganz aufgehoben, wie aus dem kleinen Spalt zwischen beiden ersichtlich. Es kann aber auch dieser Druck lediglich klein genug gehalten werden, um keinen Einfluss auf die Positionierung des Werkstückes auszuüben; in beiden Fällen wird das Werkstück einzig durch die Zange 2 zentriert. Demzufolge braucht der eingezogene Dorn 3 nicht exakt zentrisch zu laufen, was den konstruktiven Aufwand für sein Lager wesentlich reduziert und fallweise die weiter oben erwähnte Lagerung in Dehnspannhülsen überflüssig macht.

Es sei noch bemerkt, dass, obwohl ein und derselbe Teil der Backe zum Halten des Dornes und zum Halten des Werkstückes vorgesehen sein kann, in der hier gezeigten, bevorzugten Ausführung verschiedene Backenteile diese Aufgaben übernehmen. Es sind dies der zum Fassen des Dornes 3 vorgesehene Backenteil 10 einerseits und der zum Fassen des Werkzeuges 4 vorgesehene Backenteil 11 andererseits. Diese Aufgabentrennung erlaubt es, den Durchmesser und fallweise auch Form und/oder Beschaffenheit der betreffenden Backenteile optimal an die zu fassenden Flächen anzupassen, insbesondere um einer Beschädigung der Fläche S auch bei Übertragung eines relativ hohen Drehmomentes von beispielsweise 100 N·m, wie es zum Schleifen benötigt wird, vorzubeugen.

## Patentansprüche

1. Futter für eine Werkzeugmaschine mit einem Maschinenkopf oder mit zwei sich gegenüberliegenden Maschinenköpfen zur Bearbeitung eines Werkstückes, wobei das Futter mindestens einen zentrisch im Futter gelagerten und längs seiner Rotationsachse verschiebbaren Zentrierdorn aufweist, der in seiner am weitesten in Richtung des zu bearbeitenden Werkstücks vorgeschobenen Stellung im Greifbereich der Zange des Futters liegt und in seiner am weitesten in entgegengesetzter Richtung zurückgezogenen Stellung ausserhalb dieses Greifbereichs liegt, **dadurch gekennzeichnet, dass** der Zentrierdorn in mindestens einer Dehnspannhülse gelagert ist.

2. Futter nach Anspruch 1, **dadurch gekennzeichnet, dass** der Zentrierdorn durch eine automatische Steuerung verschiebbar ist.

3. Futter nach einem der vorangehenden Ansprüche, **dadurch gekennzeichnet, dass** die Backen seiner zange an einer ersten Stelle zum Fassen des Zentrierdornes und an einer zweiten, gegenüber der ersten axial verschobenen Stelle zum Fassen des Werkstückes eingerichtet sind.

4. Verfahren für die Bearbeitung eines Werkstückes auf einer mit dem Futter nach einem der vorangehenden Ansprüche ausgerüsteten Werkzeugmaschine, **dadurch gekennzeichnet, dass** das Werkstück während mindestens einem Bearbeitungsschritt an seinem dem Futter zugewandten Ende durch den Zentrierdorn zentrisch gehalten wird, wobei der Zentrierdorn in den Backen des Futters eingespannt wird und die mindestens eine Dehnspannhülse gespannt wird, um dem Zentrierdorn zusätzlichen Halt zu geben.

5. Verfahren nach Anspruch 4, **dadurch gekennzeichnet, dass** eine Werkzeugmaschine mit zwei Futtern nach einem der Ansprüche 1 bis 3 verwendet wird, wobei das Werkstück jeweils während mindestens einem Bearbeitungsschritt an seinem dem jeweiligen Futter zugewandten Ende durch den Zentrierdorn zentrisch gehalten wird, wobei der Zentrierdorn in den Backen des jeweiligen Futters eingespannt wird und die mindestens eine Dehnspannhülse des jeweiligen Futters gespannt wird, um dem Zentrierdorn zusätzlichen Halt zu geben.

6. Verfahren nach einem der Ansprüche 4 oder 5, **dadurch gekennzeichnet, dass** während des einen Bearbeitungsschrittes die Rotation eines Futters durch einen mit diesem verbundenen Mitnehmer auf das Werkstück übertragen wird.

7. Verfahren nach einem der Ansprüche 4 oder 5, **dadurch gekennzeichnet, dass** die Rotation des Werkstückes während des einen Bearbeitungsschrittes in einer von der Futterrotation mechanisch unabhängigen Weise erzeugt wird.

8. Verfahren nach Anspruch 7, **dadurch gekennzeichnet, dass** während des einen Bearbeitungsschrittes mindestens ein Futter still steht.

9. Verfahren nach einem der Ansprüche 4 bis 8, **dadurch gekennzeichnet, dass** während mindestens einem anderen Bearbeitungsschritt des Werkstückes mindestens ein Zentrierdorn frei von der zugehörigen Zange und hinter diese zurückgezogen ist, und dass diese Zange dann das Werkstück festhält.

10. Verfahren nach Anspruch 9, **dadurch gekennzeichnet, dass** der Teil der Backen mindestens einer Zange, welcher während des einen Schrittes den Zentrierdorn festhält ein anderer ist, als derjenige welcher während des anderen Schrittes das Werkstück festhält.

11. Verfahren nach einem der Ansprüche 4 bis 10, **dadurch gekennzeichnet, dass** der eine Bearbeitungsschritt die Bearbeitung eines Teiles des Werkstückes umfasst, das dem Futter des betreffenden Spannstockes näher liegt, als der während des anderen Bearbeitungsschrittes bearbeitete Teil.

12. Verfahren nach einem der Ansprüche 4 bis 11, **dadurch gekennzeichnet, dass** der eine Bearbeitungsschritt zuerst und der andere später stattfindet, und dass die Zange das Werkstück während des späteren Schrittes an einer im früheren Schritt bearbeiteten Stelle festhält.

13. Verfahren nach einem der Ansprüche 9 bis 12, **dadurch gekennzeichnet, dass** das Werkstück während mindestens einem Teil des Überganges zwischen dem einen und dem anderen Bearbeitungsschritt an mindestens einem Ende durch einen Zentrierdorn getragen wird, indem dieser gegen diese Ende drückt.

14. Verfahren nach einem der Ansprüche 4 bis 13, **dadurch gekennzeichnet, dass** der mindestens eine Zentrierdorn hydraulisch oder pneumatisch in der Richtung der Drehachse des Futters bewegt wird.

## Claims

1. Chuck for a machine tool having one machine head or having two machine heads facing each other for machining of a workpiece, wherein the chuck comprises at least one centering pin journalled centrally in the chuck and displaceable along its rotation axis, which in its furthest in direction to the workpiece to be machined pushed position is located within the gripping area of the chuck and in its furthest in opposite direction retracted position is located outside of said gripping area, charcterized in that the centering pin is journalled in at least one expanding clamping sleeve.

2. Chuck according to claim 1, **characterized in that** the centering pin is displaceable by means of an automatic control system.

3. Chuck according to one of the preceding claims, **characterised in that** the jaws of its tongs at a first location are shaped for gripping the centering pin and at a second location, which is axially displaced with respect to the first one, are shaped for gripping the workpiece.

4. Method for machining a workpiece on a machine tool equipped with the chuck according to one of the preceding claims, **characterized in that** the workpiece, at least during one machining step, is, at its end which is facing the chuck, centrically held by the centering pin, wherein the centering pin is clamped in the jaws of the chuck and the at least one expanding clamping sleeve is expanded for providing additional support to the centering pin.

5. Method according to claim 4, **characterized in that** a machine tool having two chucks according to one of the claims 1 to 3 is used, wherein the workpiece during at least one machining step, respectively, is centrically held at its end facing the respective chuck by the centering pin, wherein the centering pin is clamped in the jaws of the respective chuck and the at least one expanding clamping sleeve of the respective chuck is expanded for providing additional support to the centering pin.

6. Method according to one of the claims 4 or 5, **characterized in that**, during said one machining step, the rotation of one chuck is transferred to the workpiece by means of a dog which is connected to said chuck.

7. Method according to one of the claims 4 or 5, **characterized in that** the rotation of the workpiece, during said one machining step, is generated in a manner which is mechanically independent from the rotation of the chuck.

8. Method according to claim 7, **characterised in that**, during said one machining step, at least one chuck is at standstill.

9. Method according to one of the claims 4 to 8, **characterised in that**, during at least one other machining step of the workpiece, at least one centering pin is free from the associated tongs and is retracted behind them, and that the tongs then clamp the workpiece.

10. Method according to claim 9, **characterized in that** those part of the jaws of at least one set of tongs, which during said one step clamps the centering pin, is different from the one which during said other step clamps the workpiece.

11. Method according to one of the claims 4 to 10, **characterized in that** said one machining step comprises the machining of a part of the workpiece, which is located nearer to the respective chuck than the part of the workpiece which is machined in said other machining step.

12. Method according to one of the claims 4 to 11, **characterized in that** said one machine step is performed first and said other is performed later, and that the tongs clamp the workpiece during the later step at a location which has been machined during the earlier step.

13. Method according to one of the claims 9 to 12, **characterised in that** the work piece, during at least a part of the change over between said one and said other machining step, on at least one end is supported by a centering pin by pressing same against said end.

14. Method according to one of the claims 4 to 13, **characterized in that** said at least one centering pin is hydraulically or pneumatically moved in direction of the rotating axis of the chuck.

## Revendications

1. Mandrin destiné à une machine-outil, comportant une tête de machine ou deux têtes de machine situées l'une en face de l'autre pour l'usinage d'une pièce, le mandrin comportant au moins une broche de centrage montée de façon centrée dans le mandrin, et pouvant être déplacée le long de son axe de rotation qui, dans sa position la plus avancée en direction de la pièce à usiner, est située dans la zone de préhension de la pince du mandrin, et dans sa position la plus retirée dans le sens contraire, est située en dehors de cette zone de préhension, **caractérisé en ce que** la broche de centrage est montée dans au moins une douille de serrage expansible.

2. Mandrin selon la revendication 1, **caractérisé en ce que** la broche de centrage peut être déplacée par une commande automatique.

3. Mandrin selon l'une des revendications précédentes, **caractérisé en ce que** les mâchoires de sa pince sont agencées, au niveau d'un premier emplacement, pour saisir la broche de centrage, et au niveau d'un deuxième emplacement, qui est décalé axialement par rapport au premier emplacement, pour saisir la pièce.

4. Procédé destiné à l'usinage d'une pièce sur une machine-outil équipée d'un mandrin selon l'une quelconque des revendications précédentes, **caractérisé en ce que**, pendant au moins une phase d'usinage, la pièce est maintenue de façon centrée par la broche de centrage au niveau de son extrémité orientée vers le mandrin, la broche de centrage étant enserrée entre les mâchoires du mandrin, et la, au moins une, douille de serrage expansible étant serrée afin de conférer un maintien supplémentaire à la broche de centrage.

5. Procédé selon la revendication 4, **caractérisé en ce qu'**il est utilisé une machine-outil avec deux mandrins selon l'une quelconque des revendications 1 à 3, la pièce étant maintenue de façon centrée par la broche de centrage au niveau de son extrémité orientée vers le mandrin respectif pendant au moins une phase d'usinage, la broche de centrage étant enserrée entre les mâchoires du mandrin respectif, et la, au moins une, douille de serrage expansible du mandrin respectif étant serrée afin de conférer un maintien supplémentaire à la broche de centrage.

6. Procédé selon l'une des revendications 4 ou 5, **caractérisé en ce que**, pendant l'une des phases d'usinage, la rotation d'un mandrin est transmise à la pièce par l'intermédiaire d'un toc d'entraînement relié à celui-ci.

7. Procédé selon l'une des revendications 4 ou 5, **caractérisé en ce que** la rotation de la pièce est engendrée pendant l'une des phases d'usinage d'une façon mécaniquement indépendante de la rotation du mandrin.

8. Procédé selon la revendication 7, **caractérisé en ce qu'**au moins un mandrin est immobilisé pendant l'une des phases d'usinage.

9. Procédé selon l'une quelconque des revendications 4 à 8, **caractérisé en ce que**, pendant au moins une autre phase d'usinage de la pièce, au moins une broche de centrage est dégagée de la pince associée, et est retirée derrière celle-ci, et **en ce que** cette pince retient alors la pièce.

10. Procédé selon la revendication 9, **caractérisé en ce que** la partie des mâchoires d'une pince au moins, qui retient la broche de centrage pendant l'une des phases, est une autre que celle qui retient la pièce pendant l'autre phase.

11. Procédé selon l'une quelconque des revendications 4 à 10, **caractérisé en ce que** l'une des phases d'usinage porte sur l'usinage d'une partie de la pièce, qui est située plus près du mandrin du bloc de serrage concerné que la partie usinés pendant l'autre phase d'usinage.

12. Procédé selon l'une quelconque des revendications 4 à 11, **caractérisé en ce que** l'une des phases d'usinage a lieu en premier lieu et l'autre ultérieurement, et **en ce que**, pendant la phase d'usinage ultérieure, la pince retient la pièce au niveau d'un emplacement usiné au cours de la phase précédente.

13. Procédé selon l'une quelconque des revendications 9 à 12, **caractérisé en ce que**, pendant une partie au moins de la transition entre l'une et l'autre phase d'usinage, la pièce est portée au niveau d'au moins une extrémité par une broche de centrage, et ce par le fait que cette dernière pousse contre cette extrémité.

14. Procédé selon l'une quelconque des revendications 4 à 13, **caractérisé en ce que** la, au moins une, broche de centrage est déplacée par voie hydraulique ou pneumatique en direction de l'axe de rotation du mandrin.
